# EUROPEAN PATENT SPECIFICATION

(11) **EP 4 018 304 B1**
(45) Date of publication and mention of the grant of the patent: **13.03.2024**
(21) Application number: 20758208.1
(22) Date of filing: 19.08.2020
(51) Int. Cl.: G06F 9/455, G06F 13/00

(54) **INTERCHANGEABLE INTERFACE ROLE REMAPPING**
AUSTAUSCHBARE SCHNITTSTELLENROLLENNEUZUORDNUNG
MAPPAGE RENOUVELÉ DE RÔLES D'INTERFACE INTERCHANGEABLES

(43) Date of publication of application: 29.06.2022
(73) Proprietor: Huawei Technologies Co., Ltd., Longgang District Shenzhen, Guangdong 518129 (CN)
(72) Inventor: BELKAR, Ben-Shahar, 80992 Munich (DE); KHERMOSH, Lior, 80992 Munich (DE)
(74) Representative: Grünecker Patent- und Rechtsanwälte PartG mbB
(86) International application number: PCT/EP2020/073228
(87) International publication number: WO 2022/037775

(56) References cited:
- EP-A1- 3 211 530
- US-A1- 2014 229 769
- US-A1- 2018 349 161

## Description

### BACKGROUND

The present disclosure, in some embodiments thereof, relates to virtual machines (VM), and, more specifically, but not exclusively, to communication between VMs and virtualized resources of physical hardware devices.

Hardware resources, in particular I/O devices such as storage devices, accelerator hardware, and network interfaces, may be virtualized. The virtualization of the hardware resources allows multiple VMs to share the same hardware resources. US2014229769 relates generally to virtualization and more specifically relates to Peripheral Component Interconnect Express technologies for enhancing Single Root Input/Output Virtualization. US2018349161 relates to information processing and techniques for management of adaptive virtual function drivers in a virtualization computing environment. EP3211530 relates to a method for managing a memory of a virtual machine, a physical host, a PCIE device and a configuration method thereof, and a migration management device

### SUMMARY

It is an object of the present disclosure to provide a computing device, a method, and a computer-readable storage medium for virtualized hardware resources of an input/output (I/O) device.

The foregoing and other objects are achieved by the features of the independent claims. Further implementation forms are apparent from the dependent claims, the description and the figures.

According to a first aspect, a computing device in communication with an input/output, I/O, device providing virtualized hardware resources for use by a plurality of virtual function, VF, drivers of a plurality of virtual machines, VM, the computing device is configured to: execute a virtual machine manager, VMM, that implements a physical function, PF, driver and a plurality of base address register, BAR, roles supported by a plurality of virtual functions exposed by the I/O device, the PF driver and the plurality of virtual functions corresponding to the plurality of virtual function, VF, drivers implemented by the plurality of VMs, in response to a bootup or a reset of the I/O device and a load of the PF driver: set, by at least one of the PF driver and the I/O device, a global configuration status register, CSR, to a mapping-value defining a certain mapping of a plurality of mappings between the plurality of BAR roles and I/O device BARs of the plurality of virtual functions, wherein in response to the setting, the plurality of VF drivers for the plurality of virtual functions corresponding to the PF driver are loaded, wherein each respective VF driver obtains the mapping-value of the global CSR and maps, according to the certain mapping, a plurality of BARs of the VF driver designated for the plurality of BAR roles, to the corresponding I/O device BARs of the plurality of virtual functions mapped to the plurality of BAR roles, wherein the BAR roles are selected from the group consisting of: Mailbox space, Doorbell space, MSI-X space, and CSR space.

According to a second aspect, a computing device executing a virtual machine, VM, the computing device configured to: execute a virtual function, VF, driver corresponding to a PF driver and an input/output, I/O, device providing virtualized hardware resources, in response to a bootup or a reset of the VF driver: access a mapping-value stored in a global CSR, the mapping-value defining a certain mapping of a plurality of mappings between a plurality of BAR roles and I/O device BARs of a plurality a virtual functions exposed by the I/O device, wherein the mapping-value is set by at least one of the PF driver and the I/O device, map according to the certain mapping, a plurality of BARs of the VF driver designated for the plurality of BAR roles, to the corresponding I/O device BARs of the plurality of virtual functions mapped to the plurality of BAR roles, and access regions of a memory allocated to each of the plurality of BAR roles, using the mapping of the plurality of the BARs of the VF designated for the plurality of BAR roles, wherein the BAR roles are selected from the group consisting of: Mailbox space, Doorbell space, MSI-X space, and CSR space.

According to a third aspect, not claimed by the invention, a method for providing virtualized hardware resources of an input/output, I/O, device for use by a plurality of virtual function, VF, drivers of a plurality of virtual machines, VM, the method comprises: executing a virtual machine manager, VMM, that implements a physical function, PF, driver and a plurality of base address register, BAR, roles supported by a plurality of virtual functions exposed by the I/O device, the PF driver and the plurality of virtual functions corresponding to the plurality of virtual function, VF, drivers implemented by the plurality of VMs, in response to a bootup or a reset of the I/O device and a load of the PF driver: setting, by at least one of the PF driver and the I/O device, a global configuration status register (CSR) to a mapping-value defining a certain mapping of a plurality of mappings between the plurality of BAR roles and I/O device BARs of the plurality of virtual functions, wherein in response to the setting, the plurality of VF drivers for the plurality of virtual functions corresponding to the PF driver are loaded, wherein each respective VF driver obtains the mapping-value of the global CSR and maps, according to the certain mapping, a plurality of BARs of the VF driver designated for the plurality of BAR roles, to the corresponding I/O device BARs of the plurality of virtual functions mapped to the plurality of BAR roles.

Standard approaches lock the PF driver and/or VF driver to the I/O device. Different versions of the same I/O device may map different BARs of the virtual functions to different roles. Changes to the mapping of the I/O device in new versions thereof necessitated upgrade/new installations of the PF driver and/or VF driver in order to correspond to the new mapping of BARs of the virtual functions to roles as in the new I/O device. In some environments, such as cloud-based environments where large numbers (e.g., thousands) of VM are running each with respective VF drivers, each VF driver requires an upgrade/new installation when the I/O device is changed.

At least some implementations described herein provide, for each change in I/O device, where the mapping between BARS of virtual functions and roles changes, that the VF driver does not need to be necessarily upgraded by installation of a new version to reflect the new mapping of the new I/O device. By changing the mapping-value to reflect the new mapping of the new I/O device, the VF drivers perform the corresponding mapping for the new I/O device.

In a further implementation form of the first, second and third aspects, the mapping-value is stored on the I/O device, and the mapping-value of the global CSR is set by the I/O device, and the computing device is further configured to: obtain the mapping-value, and set, by the PF driver, according to the certain mapping corresponding to the mapping-value, addresses of a plurality of BARs of the PF driver designated for the plurality of BAR roles, to the corresponding BARs of the plurality of virtual functions mapped to the plurality of BAR roles.

At least some implementations described herein provide, for each change in I/O device, where the mapping between BARS of virtual functions and roles changes, the PF driver does not need to be necessarily upgraded by installation of a new version to reflect the new mapping of the new I/O device. By changing the mapping-value to reflect the new mapping of the new I/O device, the PF driver perform the corresponding mapping for the new I/O device.

In a further implementation form of the first, second and third aspects, the computing device is configured to: issue a request of the PF driver to the I/O device, the request denoting a change of at least one mapping between at least one of (i) at least one of the plurality of BAR roles and at least one I/O device BAR of the plurality of virtual functions, and (ii) at least one of the plurality of BAR roles and at least one I/O device BAR of the plurality of physical functions, in response to approval of the request, the mapping-value of the global CSR is set according to the change of the at least one mapping.

The PF driver may negotiate mappings with the I/O device, enabling support of backward compatible versions.

In a further implementation form of the first, second and third aspects, the computing device is configured to: mirror the mapping-value of the global CSR to each of a plurality of global VF BAR registers designated for the plurality of VF drivers, wherein each respective VF driver obtains the mapping-value from the corresponding respective global VF BAR register.

The mirroring enables selecting which VF drivers are updated according to the mapping-value, for example, some VF drivers are not updated in response to the mapping-value.

In a further implementation form of the first, second and third aspects, the PF driver maps, according to the certain mapping, a plurality of BARs of each respective VF driver designated for the plurality of BAR roles, to the corresponding I/O device BARs of the plurality of virtual functions mapped to the plurality of BAR roles, reflecting the mapping of the I/O device global CSR value.

In a further implementation form of the first, second and third aspects, the computing device is further configured to: set, by at least one of the PF driver and the I/O device, each one of a plurality of global VF driver registers allocated to the plurality of VF drivers to a respective mapping-value, wherein each respective VF driver obtains the respective mapping-value from the one respective global VF BAR register and maps, according to the mapping defined by the respective mapping-value, the plurality of BARs of the VF driver designated for the plurality of roles, to the corresponding I/O device BARs of the plurality of virtual functions mapped to the plurality of BAR roles.

Using global registers for each VF driver may provide finer control, enabling different mappings for different VF drivers, for example, VF drivers of different versions may be provided with different mappings, enabling backwards compatibility.

In a further implementation form of the first, second and third aspects, the mapping-value is set according to a respective version of the I/O device, wherein different mapping-values defining different mappings are set for different versions of I/O devices.

Mapping according to the version of the I/O device provides backwards compatibility for the different versions of the I/O device, and/or may support maintaining the same device ID for different versions of the I/O device.

In a further implementation form of the first, second and third aspects, the bootup or the reset of the I/O device comprises at least one of a single-root input/output virtualization, SR-IOV, enablement, and a VF driver exposure operation.

Remapping may be dynamically performed in response to the SR-IOV enablement and/or VF driver exposures.

In a further implementation form of the first, second and third aspects, the global CSR comprises a plurality of global role CSRs each corresponding to one of the plurality of roles, wherein each of the plurality of global role CSRs is set with a respective role mapping-value defining a certain mapping of a plurality of mappings between a certain role and at least one I/O device BAR of the plurality of virtual functions, wherein each respective VF driver obtains respective role mapping-values from the plurality of global role CSRs and maps at least one BARs of the VF driver designated for each respective role.

The multiple global role CSRs may provide additional control over mapping of individual roles, enabling adjusting the mapping of each BAR role independently of other BAR roles. Locating the global CSR consistently on same BAR, enables using the same VF driver each time. If the global CSR is located on a different BAR at each bootup (or other event), a different VF driver is needed each time.

In a further implementation form of the first, second and third aspects, the I/O device implements a protocol for virtualizing hardware resources thereof based on the Peripheral Component Interconnect Express, PCIe, standard.

PCIe BAR enumeration process which happens when PCIe initializes, includes all possible BAR areas (without knowing their roles) for the PF driver and the VFs. Implementations described herein are compatible with the PCIe enumeration process, and do not require a re-enumeration of the PCIe.

In a further implementation form of the first, second and third aspects, the PCIe implements SR-IOV.

In a further implementation form of the first, second and third aspects, the global CSR is located in a constant location that does not change during at least one member selected from the group consisting of: subsequent bootup, reset, initialization processes, change in identification of the I/O device, and change in version of the I/O device.

Using a fixed location for the global CSR enables computationally efficient and automatic mapping triggered by events such as bootup and/or reset and/or initialization, by enabling the drivers to known in advance where the mapping is found.

In a further implementation form of the first, second and third aspects, a plurality of instances of an adaptive VF, AVF, and/or assignable device interface, ADI, are implemented as the plurality of VF drivers, the plurality of instances of the AVF are mapped to the PF driver implemented as a single common PF driver, wherein the plurality of BARs of the plurality of VF drivers implementable by the plurality of instances of the AVF are concurrently mapped.

When the VF driver is specific to the hardware (e.g., of the I/O device), the ADF is designed to run on any kind of hardware, without being specific to the hardware.

In a further implementation form of the first, second and third aspects, the mapping-value defines the certain mapping by at least one member selected from the group consisting of: a dataset that maps between mapping-values and the plurality of mappings, conditional code that selects the certain mapping according to the mapping-value, a bit map where each bit corresponds to a different mapping, and predefined structure of the mapping-value that defines locations within the mapping-value corresponding to different mappings.

The mapping defined by the mapping-value may be implemented using a computationally efficient data structure, and/or within the mapping-value itself so that the mapping-value itself provides the mapping and another data structure is not necessarily required. The implementation may be selected for each updating of new mappings.

The method according to the third aspect may be performed by a computer-readable storage medium storing program code, the program code comprising instructions, which when performed on a computer cause the computer to perform the method according to the third aspect.

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the disclosure are herein described, by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.

In the drawings:
FIG. 1 is a block diagram of components of a computing device that maps between BAR roles and I/O device BARs of virtual functions according to a mapping-value stored in a global CSR, in accordance with some embodiments;
FIG. 2 depicts exemplary dataflow between components of computing device described with reference to FIG. 1, in accordance with some embodiments;
FIG. 3A is a flowchart of a method for setting the mapping-value and mapping according to the mapping-value, in accordance with some embodiments;
FIG. 3B is a schematic depicting mapping between BAR roles and I/O device BARs of virtual functions according to a mapping-value, in accordance with some embodiments;
FIG. 4 is a flowchart of an overall process method for setting up a virtual operating environment based on a mapping between BAR roles and I/O device BARs of virtual functions according to a mapping-value stored in a global CSR, in accordance with some embodiments; and
FIG. 5 depicts an exemplary virtualized environment in which a mapping between BAR roles and I/O device BARs of virtual functions is according to a mapping-value stored in a global CSR, in accordance with some embodiments.

### DETAILED DESCRIPTION

The present disclosure, in some embodiments thereof, relates to virtual machines (VM), and, more specifically, but not exclusively, to communication between VMs and virtualized resources of physical hardware devices.

An aspect of some implementations of the systems methods, apparatus, and/or code instructions described herein relates to a global configuration status register (CSR) that is set to a mapping-value. The mapping-value defines a certain mapping between BAR roles and I/O device BARs of virtual functions exposed by an input/output (I/O) device. The I/O device provides virtualized hardware resources for use by multiple virtual function (VF) drivers of multiple virtual machines (VM). The BAR roles indicate the purpose (i.e., role) to which a respective BAR is assigned to, for example, one BAR is assigned for the role use for message signaled interrupts (MSI-X), another BAR is assigned to the role of use for a doorbell, yet another BAR is assigned for use for a mailbox, and yet another BAR is assigned for use by control and status register (CSR). Each mapping-value defines a different mapping between the BAR roles and the I/O device BARs, such that different mappings may be selected by changing the mapping-value. Each VF driver obtains the mapping-value from the global CSR, and maps BARs of the VF driver designated for the BAR roles, to the corresponding I/O device BARs of the virtual functions, according to the mapping defined by the mapping-value. The mapping between the BARs of the VF driver designed for the BAR roles and the corresponding I/O device BARs of the virtual functions may be adapted by adapting the mapping-value. For example, the BARs used for MSI-X may be mapped to I/O device BARs 4-5 for one mapping-value, and for another mapping-value, the BARs used for MSI-X may be mapped to I/O device BARs 2-3.

At least some implementations of the methods, apparatus, and/or code instructions described herein address the technical problem of improving efficiency of upgrading I/O devices the hardware resources of which are virtualized and used by VF drivers running on VM machines. Standard approaches lock the PF driver and/or VF driver to the I/O device. Different versions of the same I/O device may map different BARs of the virtual functions to different roles. Changes to the mapping of the I/O device in new versions thereof necessitated upgrade/new installations of the PF driver and/or VF driver in order to correspond to the new mapping of BARs of the virtual functions to roles as in the new I/O device. In some environments, such as cloud-based environments where large numbers (e.g., thousands) of VM are running each with respective VF drivers, each VF driver requires an upgrade/new installation when the I/O device is changed.

The problem is especially pronounced in datacenters, such as cloud services, where a large number of VMs are executed (e.g., thousands). Moreover, code executing on the VMs may be imported by external customers using the cloud service. Maximizing compatibility between the capabilities of the hardware devices available to the VM and capacities desired by the VM helps improve performance by maximizing the number of capabilities and/or parameters of the capabilities that the VMs are able to execute on the underlying hardware devices.

At least some implementations of the systems, methods, code instructions described herein provide a technical solution to the technical problem, by providing, for each change of the I/O device, where the mapping between BARs of virtual functions and roles changes, that the VF driver does not need to be necessarily upgraded by installation of a new version to reflect the new mapping of the new I/O device. By changing the mapping-value to reflect the new mapping of the new I/O device, the VF drivers perform the corresponding mapping for the new I/O device.

Before explaining at least one embodiment of the disclosure in detail, it is to be understood that the disclosure is not necessarily limited in its application to the details of construction and the arrangement of the components and/or methods set forth in the following description and/or illustrated in the drawings and/or the Examples. The scope of the invention is defined by the claims.

The present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

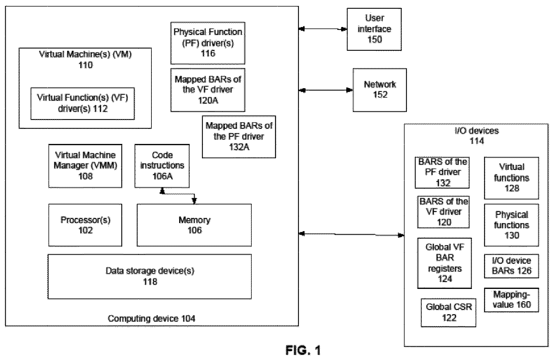

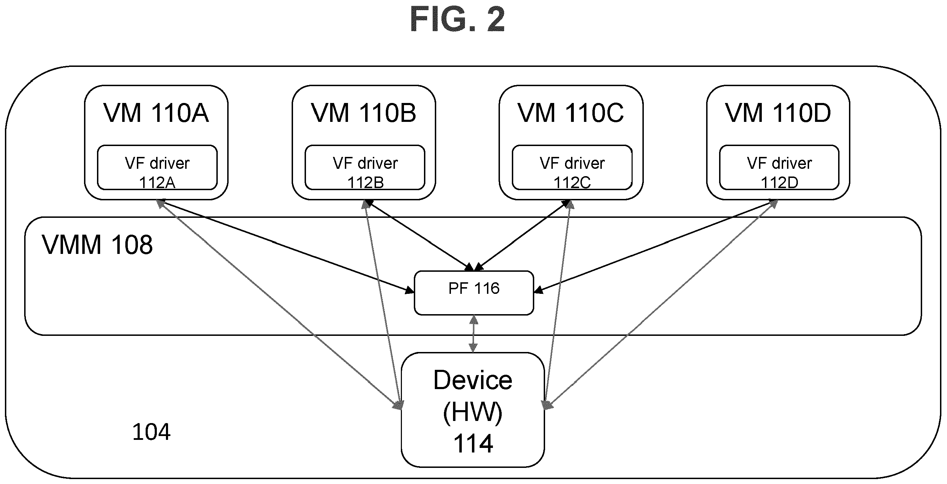

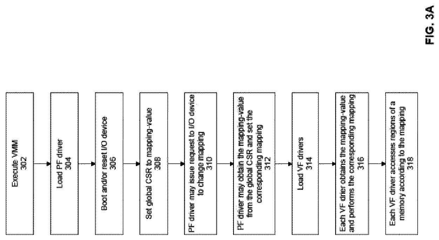

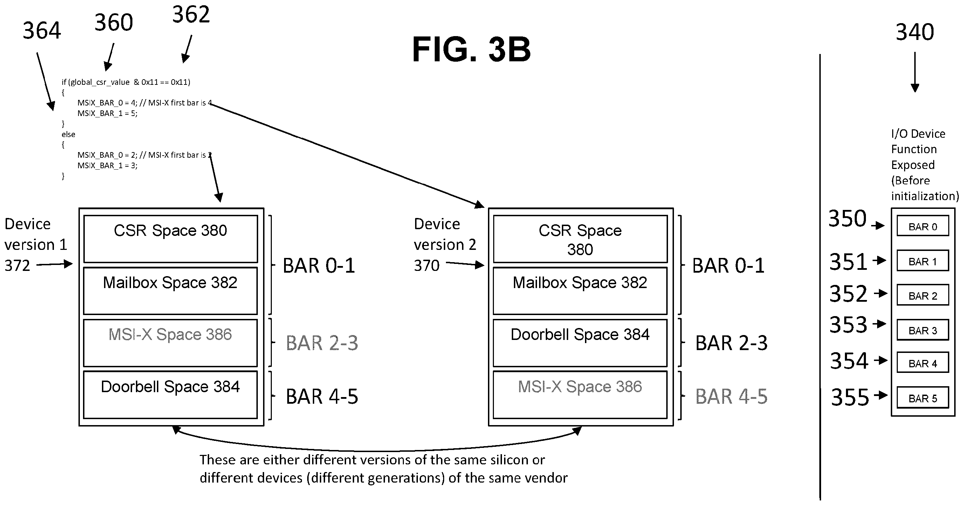

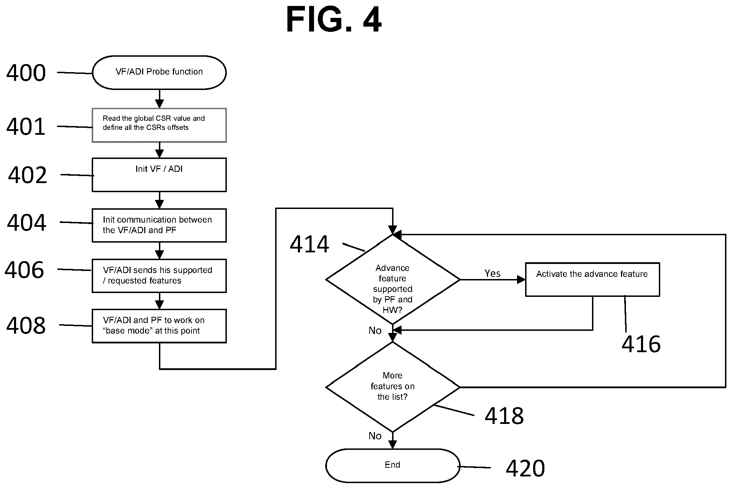

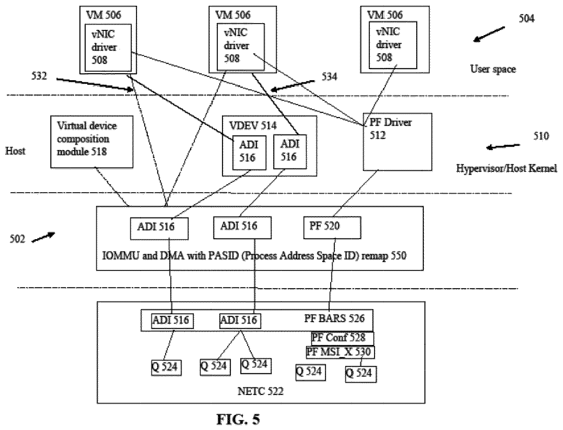

Reference is now made to FIG. 1, which is a block diagram of components of a computing device 104 that maps between BAR roles and I/O device BARs of virtual functions according to a mapping-value stored in a global CSR, in accordance with some embodiments. Reference is also made to FIG. 2, which depicts exemplary dataflow between components of computing device 104 described with reference to FIG. 1, in accordance with some embodiments. Reference is also made to FIG. 3A, which is a flowchart of a method for setting the mapping-value and mapping according to the mapping-value, in accordance with some embodiments. Reference is also made to FIG. 3B, which is a schematic depicting mapping between BAR roles and I/O device BARs of virtual functions according to a mapping-value, in accordance with some embodiments. Reference is also made to FIG. 4, which is a flowchart of an overall process method for setting up a virtual operating environment based on a mapping between BAR roles and I/O device BARs of virtual functions according to a mapping-value stored in a global CSR, in accordance with some embodiments. Reference is also made to FIG. 5, which depicts an exemplary virtualized environment 502 in which a mapping between BAR roles and I/O device BARs of virtual functions is according to a mapping-value stored in a global CSR, in accordance with some embodiments. The features described with reference to FIGs. 3-5 may be implemented by components of computing device 104 described with reference to FIG. 1 and/or FIG. 2, for example, by processor(s) 102 of a computing device 104 executing code instructions (e.g., code 106A) stored in a memory 106.

Computing device 104 may be implemented as, for example, one or more of: a computing cloud, a single computing device (e.g., client terminal), a group of computing devices arranged in parallel, a network server, a local server, a remote server, a client terminal, a mobile device, a stationary device, a kiosk, a smartphone, a laptop, a tablet computer, a wearable computing device, a glasses computing device, a watch computing device, and a desktop computer.

Processor(s) 102, implemented as for example, central processing unit(s) (CPU), graphics processing unit(s) (GPU), field programmable gate array(s) (FPGA), digital signal processor(s) (DSP), application specific integrated circuit(s) (ASIC), customized circuit(s), processors for interfacing with other units, and/or specialized hardware accelerators. Processor(s) 102 may be implemented as a single processor, a multi-core processor, and/or a cluster of processors arranged for parallel processing (which may include homogenous and/or heterogeneous processor architectures).

Memory 106 stores code instructions implementable by processor(s) 102. Memory 106 is implemented as, for example, a random access memory (RAM), read-only memory (ROM), and/or a storage device, for example, non-volatile memory, magnetic media, semiconductor memory devices, hard drive, removable storage, and optical media (e.g., DVD, CD-ROM).

Memory 106 may store virtual machine manager (VMM) 108 that manages and/or runs one or more virtual machines (VM) 110. VMM 108 may be implemented as a hypervisor. VMM 108 may be implemented in hardware, software, firmware, and/or combination of the aforementioned.

Each VM 110 executes one or more virtual function (VF) drivers 112.

A mapping-value 160 defining a certain mapping of multiple mappings between BAR roles and I/O device BARs 126 of virtual functions 128 may be stored, for example, on a memory of I/O device 114.

Each VF driver is provided with access to respective BARS of the VF driver 120, which are designated for the plurality of BAR roles, and mapped according to mapping-value 160, as described herein.

Optionally, access to one or more of: BARs of the PF driver 132, BARs of the VF driver 120, global CSR 122, and global VF BAR registers 124, may be through a MMIO access mapped on computing device 104 (e.g., acting as a host), but accessing that memory is via I/O device 114, as BARs 132 120 124 and CSR 122 are memory mapped registers. Computing device 104 (e.g., host) interfaces with BARs 132 120 124 and CSR 122 which may be physically located on I/O device 114, via respective mapped BARs of the VF driver 120A and mapped BARs of the PF driver 132A locally located on computing device 104. Computing device 104 may access global CSR 122 through the BAR.

One or more global CSRs 122 store mapping-value that defines the mapping, as described herein. Optionally, multiple global VF BAR registers 124 each store their own mapping-value, which may be a mirror of the mapping-value stored in global CSR 122, and/or independently set, as described herein.

Computing device 104 includes and/or is in communication with one or more I/O devices 114. The I/O devices 114 may be input/output (I/O) devices, for example, universal serial bus, network adapter (for wired and/or wireless networks), network interface card, accelerator, graphics devices, and storage device.

I/O device 114 includes I/O device BARs 126, which are for virtual functions 128, as described herein. I/O device BARs 126 are mapped to BAR roles, as described herein.

Each I/O device 114 is associated with one or more physical function (PF) drivers 116. I/O device 114 includes physical functions 130 corresponding to VF function driver 116, as described herein. VF function driver 116 may access BARs of the PF driver 132, as described herein.

Computing device 104 may include and/or be in communication with one or more data storage devices 118. Data storage devices 118 may store, for example, different versions of VMs, VFs drivers, PFs drivers, and/or VMM, and/or other data. It is noted that code instructions may be selectively loaded from data storage device 118 into memory 106 for execution by processor(s) 102. Data storage device(s) 118 may be implemented as, for example, a memory, a local hard-drive, a removable storage unit, an optical disk, a storage device, and/or as a remote server and/or computing cloud (e.g., accessed via a network connection).

Computing device 104 may be in communication with a network 152, for example, the internet, a local area network, a virtual network, a wireless network, a cellular network, a local bus, a point to point link (e.g., wired), and/or combinations of the aforementioned.

Computing device 104 may include a network interface for communication with network 152. The network interface may be implemented as one or more of I/O devices 114 with associated PF driver(s) 116. The network interface may be virtualized, for use by multiple VMs 110 via corresponding executed VF drivers 112. For example, different VMs 110 may access network 152 by VF driver(s) 112 communicating with PF driver(s) 116 of the network interface.

Computing device 104 may include and/or be in communication with one or more physical user interfaces 150 that include a mechanism for user interaction, for example, to enter data (e.g., select a version of the VF to load) and/or to view data (e.g., view the mappings).

Exemplary physical user interfaces 150 include, for example, one or more of, a touchscreen, a display, gesture activation devices, a keyboard, a mouse, voice activated software using speakers and microphone, and an orchestrator sending data over a network interface.

Referring now back to FIG. 2, I/O device 114 is virtualized via PF driver 116. The physical resources of I/O device 114 are partitioned, and made available for access and use by multiple VMs 110A-D via corresponding executed VF drivers 112A-D. Each VF driver 112A-D communicates with a PF 116 associated with I/O device 114. The VF driver 112A-D may be used without consideration as to the actual underlying I/O device 114 that is being used.

VF drivers 112 and PF drivers 116 are defined, for example, by the PCI express (PCIe) format, in particular, a single root input/output (I/O) virtualization (SR-IOV) feature of the PCIe. SR-IOV enables the portioning of the resources of I/O device 114 (e.g., network adapter) for use by multiple VMs 110A-D. For example, memory and/or network ports of I/O device 114 such as a network adapter are partitioned and shared by VF drives 112A-D. Network traffic streams flowing between each VF 112A-D and PF 116 may be differentiated and identified, allowing memory and/or interrupt translation between the respective VF 112A-D and PF 116 to be applied. The network traffic streams may flow between PF 116 and each respective VF 112A-D without affecting the VFs. The network traffic may achieve performance that is close to the bare metal (i.e., non-virtualized) performance.

Optionally, VF drivers 112A-D are implemented as Adaptive Virtual Function (AVF) drivers and/or assignable device interface (ADI). As used herein, the term AVF may sometimes refer to, and/or be interchangeable with, the term ADI. Multiple instances of the AVF and/or ADI are implemented on multiple VMs 110. The instances of the AVF and/or ADI are mapped to a single common PF driver 116. The instances of the AVF and/or ADI are concurrently and similarly adapted. The AVF adapts to changing capabilities of the physical function driver (PF) with which it is associated. Using the AVF enables updating the PF without necessarily updating all the associated VF drivers. The AVFs have a single common device ID and branding string. Adaptive Virtual Function (AVF) may be implemented as an SR-IOV Virtual Function with the same device ID on different vendor I/O devices 114. In some implementations, the AVF driver is a VF driver which supports all future vendor devices without requiring a VM update. For the AVF driver, every new drop of the VF driver adds additional advanced capabilities that may be activated in the VM when the underlying HW device supports those advanced capabilities, based on a device agnostic way without compromising on the base functionality.

Referring now back to FIG. 3A, at 302, a VMM is executed. The VMM includes code for implementing a PF driver and multiple BAR roles supported by virtual functions exposed by an I/O device. The I/O device provides virtualized hardware resources for use by VF drivers of VMs. The PF driver and the virtual functions correspond to the VF drivers implemented by VMs.

At 304, the PF driver is loaded.

At 306, the I/O device is booted and/or reset, for example, the I/O device is upgraded to a new version.

Optionally, the I/O device implements a protocol for virtualizing hardware resources thereof based on the PCIe (Peripheral Component Interconnect Express) standard. The PCIe may implements single-root input/output virtualization (SR-IOV). PCIe BAR enumeration process which happens when PCIe initializes, includes all possible BAR areas (without knowing their roles) for the PF driver and the VFs. Implementations described herein are compatible with the PCIe enumeration process, and do not require a re-enumeration of the PCIe.

The bootup and/or the reset of the I/O device may include an SR-IOV enablement process and/or a VF driver exposure operation. Remapping may be dynamically performed in response to the SR-IOV enablement and/or VF driver exposures.

At 308, a global CSR is set to a mapping-value that defines a mapping between the BAR roles and I/O device BARs of the virtual function. The mapping is one of multiple different possible mappings. Changing the mapping-value changes the mapping.

The mapping-value may be stored in a flash memory (e.g., NVM) of the I/O device.

The mapping may be set by the PF driver and/or the I/O device.

Optionally, the mapping-value is set according to a respective version of the I/O device. Different mapping-values defining different mappings are set for different versions of I/O devices. Mapping according to the version of the I/O device provides backwards compatibility for the different versions of the I/O device, and/or may support maintaining the same device ID for different versions of the I/O device.

Optionally, the global CSR is located in a constant location that does not change during one or more of: a subsequent bootup, a reset, an initialization process, a change in identification of the I/O device, and a change in version of the I/O device. Using a fixed location for the global CSR enables computationally efficient and automatic mapping triggered by events such as bootup and/or reset and/or initialization, by enabling the drivers to known in advance where the mapping is found.

Optionally, a single global CSR is set.

Alternatively, each of multiple global VF CSRs are set. Each global VF CSR is allocated to one of the multiple VF drivers. Each global VF CSR may be independently set to a respective mapping-value, which is implemented by the corresponding VF driver. Using global registers for each VF driver may provide finer control, enabling different mappings for different VF drivers, for example, VF drivers of different versions may be provided with different mappings, enabling backwards compatibility.

Alternatively or additionally, multiple global role CSRs are set. Each global role CSR corresponding to a subset (e.g., one or more) of the BAR roles. Each of the global role CSRs may be set with a respective role mapping-value defining a certain mapping (selected from multiple candidate mappings) between a certain role (or subset of roles) and one or more I/O device BAR of the virtual functions. The multiple global role CSRs may provide additional control over mapping of individual roles, enabling adjusting the mapping of each BAR role independently of other BAR roles. Locating the global CSR consistently on same BAR, enables using the same VF driver each time. If the global CSR is located on a different BAR at each bootup (or other event), a different VF driver is needed each time.

Alternatively or additionally, the mapping-value of the global CSR to is mirrored to each one of multiple global VF CSRs designated for the VF drivers. The mirroring enables selecting which VF drivers are updated according to the mapping-value, for example, some VF drivers are not updated in response to the mapping-value.

Different implementations of the mapping-value defining the corresponding mapping may be implemented. The mapping defined by the mapping-value may be implemented using a computationally efficient data structure, and/or within the mapping-value itself so that the mapping-value itself provides the mapping and another data structure is not necessarily required. The implementation may be selected for each updating of new mappings. Exemplary implementations include:
- A dataset that maps between mapping-values and mappings. For example, one array stores different mapping-values, another array stores the candidate mappings, and pointers point between the two arrays. In another example, a table is used, where one column stores mapping-values, another column stores mappings, and each row maps between mapping-values and mappings.
- Conditional code that selects the mapping according to the mapping-value. The code may be implemented using and if... then structure. For example, if mapping-value = a first value then implement a first mapping, if mapping-value = a second value then implement a second mapping.
- A bitmap and/or array of bits, where each bit corresponds to a different mapping. The mapping-value may indicate the index to the bitmap and/or array for obtaining the corresponding mapping.
- The mapping-value itself may be set according to a predefined structure that defines the mapping, without necessarily requiring additional data that defines the mapping. For example, locations within the mapping-value corresponding to different mappings. For example, the mapping-value is structured into multiple regions (e.g., elements of an array, predefined number of bits per region), where each region corresponds to a respective BAR role. The value stored within the respective region indicates the I/O device BARs of the virtual functions. In another example, each region corresponds to a respective I/O device BAR of the virtual functions, and the value stored within the respective region indicates the corresponding mapped BAR role.

At 310, the PF driver may negotiate mappings with the I/O device, enabling support of backward compatible versions. The PF driver may issue a request message to the I/O device. The request indicates a change of the mapping between one or more of the BAR roles and one or more I/O device BAR of the virtual functions. Alternatively or additionally, the request indicates a change of the mapping between one or more of the BAR roles and one or more I/O device BAR of the physical functions. The I/O device may approve or deny the request. In response to approval of the request, the mapping-value of the global CSR is set according to the change of the mapping defined by the request.

At 312, optionally the PF driver obtains the mapping-value from the global CSR. The global CSR may be set to the mapping-value by the I/O device, using the mapping-value stored on the I/O device. The PF driver sets, according to the mapping corresponding to the mapping-value, addresses of BARs of the PF driver designated for the BAR roles, to the corresponding BARs of the virtual functions mapped to the BAR roles. For each change in I/O device, where the mapping between BARs of virtual functions and roles changes, the PF driver does not need to be necessarily upgraded by installation of a new version to reflect the new mapping of the new I/O device. By changing the mapping-value to reflect the new mapping of the new I/O device, the PF driver perform the corresponding mapping for the new I/O device.

At 314, the VF drivers for the virtual functions corresponding to the PF driver are loaded and/or reset. The loading and/or reset of the VF drivers may occurs after the global CSR is set with the mapping-value, to enable the VF drivers to automatically access the mapping-value.

At 316, each respective VF driver obtains the mapping-value of the global CSR. Alternatively, each VF driver obtains the mapping-value from a corresponding respective global VF BAR that is mirrored to the global CSR.

Each respective VF driver maps, according to the mapping defined by the mapping-value, BARs of the VF driver designated for the BAR roles, to the corresponding I/O device BARs of the virtual functions mapped to the BAR roles.

Optionally, when multiple global VF BARs are allocated to the VF drivers, e.g., each VF driver corresponds to its own dedicated global VF BAR, each VF driver obtains its respective mapping-value from its respective global VF BAR. Each respective VF driver maps, according to the mapping defined by the respective mapping-value, the BARs of the VF driver designated for the roles, to the corresponding I/O device BARs of the virtual functions mapped to the BAR roles.

Optionally, when multiple global role CSRs are set, where each global role CSR corresponding to a subset of one or more of the BAR roles, each respective VF driver obtains the respective role mapping-values from the corresponding global role CSRs. For example, each VF driver accesses each one of the global role CSRs to obtain the set of mapping-values. Each VF driver maps the BARs of the VF driver designated for each respective role according to the corresponding mapping-values.

Optionally, multiple instances of an AVF and/or ADI are implemented as the VF drivers. When the VF driver is specific to the hardware (e.g., of the I/O device), the AVF is designed to run on any kind of hardware, without being specific to the hardware.

At 318, each of the VF drivers accesses regions of a memory allocated to each of the BAR roles using the mapping of the BARs of the virtual functions designated for the BAR roles.

Referring now back to FIG. 3B, schematic 340 depicts I/O device BARs 0-5 (350-355) of virtual functions exposed by the I/O device before initialization. A mapping-value 360 (denoted global_csr_value 360) is set to 0x11 (denoted by 362).

Pseudo code 364 represents an exemplary implementation of selection a mapping for BAR roles MSIX_BAR_0 and MSIX_BAR_1 based on mapping value 360. If mapping-value 360 is equal to 0x11 (362), then MSI_BAR_0 is set to I/O device BAR 4 (354) and MSIX_BAR_1 is set to I/O device BAR 5 (355), for example, to correspond to version 2 of I/O device 370. Alternatively, for other mapping-values 360 (i.e., not 0x11 (362)), then MSI_BAR_0 is set to I/O device BAR 2 (352) and MSIX_BAR_1 is set to I/O device BAR 3 (353), for example, to correspond to version 1 of I/O device 372.

I/O device version 2 (370) may be an upgrade of I/O device version 1 (372), for example, different versions of the same silicon, or different devices (e.g., different generations) of the same vendor. In I/O version 2 (370), BAR role CSR space 380 is allocated to I/O device BAR 0 (350), BAR role Mailbox space 382 is allocated to I/O device BAR 1 (351), BAR role Doorbell space 384 is allocated to I/O device BARs 2-3 (352-3), and BAR role MSI-X space 386 is allocated to I/O device BARs 4-5 (354-5). In I/O version 1 (372), BAR role CSR space 380 is allocated to I/O device BAR 0 (350), BAR role Mailbox space 382 is allocated to I/O device BAR 1 (351), BAR role Doorbell space 384 is allocated to I/O device BARs 4-5 (354-5), and BAR role MSI-X space 386 is allocated to I/O device BARs 2-3 (352-3).

Using standard approaches, the PF driver and the VF drivers needed to be updated to correspond to the changes between I/O device version 1 (372) and I/O device version 2 (370), for example, download re-compile and re-load on every VM, which requires significant amount of work and is highly inefficient. Alternatively, using at least some embodiments described herein, the mapping between the BAR roles (MSIX roles are shown as one example) and I/O device BARs 350-355 of the virtual functions is selected according to mapping-value 360, for example, based on the version of the I/O device. Existing installed VF drivers and/or PF drivers may be maintained when mapping-value 360 is implemented, as described herein.

Mapping-value 360 may be set (e.g., by the I/O device itself and/or PF driver) according to the version of the I/O device. For example, when the PF driver determines that the installed I/O device is version 2 (370), the PF driver and/or the IO device sets the global CSR to the mapping-value 0x11.

Referring now back to FIG. 4, at 400, a VF (e.g., may alternatively be implemented as AVF) and/or ADI (the term VF driver and ADI may be interchanged) probe function is executed.

At 401, the global CSR, which is set to the mapping-value (as described with reference to FIG. 3A) is read. The mapping of the BARs is performed based on the mapping-value, as described herein.

At 402, the VF driver and/or ADI is initialized. For example, the VM may initialize the VF driver corresponding to desired capabilities of the I/O device, for example, a new version of the VF driver is loaded to provide additional capabilities for enablement on the I/O device. Initialization may occur, for example, upon reset and/or boot-up of the VM, the VF driver, the PF driver, and/or the hardware device.

Each VF driver obtains the mapping-value from the global CSR, and performs the mapping corresponding to the mapping-value, as described with reference to FIG. 3A.

At 404, communication between the VF driver and the PF driver corresponding to the I/O device is initiated. Optionally, the VF driver initiates communication with the PF driver.

At 406, the VF driver sends a message to the PF driver with requested capabilities and/or requested parameter of the capabilities supported by the VF driver for enablement on or by the I/O device. The VF may ask to enable the capabilities in the message on the hardware device for the VF and/or expose virtual interfaces of the hardware device for the VF.

The capabilities may include a set of base capabilities set and/or another set of advanced capabilities. Some implementations of the VF driver (e.g., AVF) define a minimum set of features referred to as "base mode," but may provide additional advanced capabilities depending on what capabilities are available in the PF with which the AVF is associated. The base mode includes a set of basic capabilities on the PF driver and the I/O device for use by the VF driver. The basic capabilities may be assumed to be available on hardware devices, as a standard. Examples of basic capabilities for a wired network adapter include basis receive and transmit queues for data transfer, signaling events to software, basic stateless operations such as checksum, segmentation offload, jumbo frames, RSS, and the like.

At 408, the VF driver and the PF driver may enable the set of base capabilities, for operating in the base mode.

The VF driver may send another message to the PF driver with requested advanced capabilities and/or requested parameter of the advanced capabilities supported by the VF driver for enablement on or by the I/O device.

At 414, each advanced feature is independently processed to determine whether the advanced feature is supported by the PF driver and I/O device.

At 416, each capability (e.g., advanced feature) that is supported by the PF driver and the I/O device is enabled (e.g., activated) by the I/O device and the PF driver for use by the VF drive. At 418, features described with reference to 414 and/or 416 are iterated. The iterations may be performed to enable each respective advanced capability, or not to enable the respective advanced capability.

At 420, the enablement of the capabilities is complete. The VF driver may use the enablement capabilities using the BAR role mappings, as described herein.

Referring now back to FIG. 5, a scalable IVO setup (S-IOV) may be implemented in virtualized environment 502. Mapping between BAR roles and I/O device BARs of virtual functions is according to a mapping-value stored in a global CSR, as described herein.

Virtualized environment 502 includes one or more of the following exemplary components:
A user space 504 includes one or more VMs 506, each implementing a virtual network interface controller (vNic) driver 508 that communicates with ADI 516. It is noted there are no VF implemented in scalable IOV virtualized environment 502. ADIs are used instead.

A hypervisor/host kernel space 510 that includes a PF driver 512, a virtual device (VDEV) 514 implementing one or more assignable device interfaces (ADI) 516, and a virtual device composition module (VDCM) 518. Virtual device composition module 518 may provide software managed resource mapping between VDEV 514 and ADIs 516.

An input/output memory management unit (IOMMU) 550 and direct memory access (DMA) with Process Address Space ID (PASID) remap code 520 implements one or more ADIs 516 and a PF 520. Each ADI 516 is tagged with a unique PASID.

An I/O device is implemented as a network card (NETC) 522. NETC 522 may be compliant with PCIe. The hardware resources of NETC 522 are virtualized via ADI 516, enabling multiple VMs 506 to each access its own assigned ADI 516 to receive and/or transmit traffic via an attached network, for example, via one or more corresponding queues (Q) 524.

NETC 522 includes a set of PF base address registers (BARs) 526 that map to ADIs 516. Each ADI 516 is able to access a different isolated portion of the PF BARs 526, and can't access the other portions of the PF BARs 526. NETC 522 may include additional registers, for example a PF configuration (Conf) register 528, and an MSI-X register 530.

Virtualizing the resources of the NETC 522 using software may deliver a near bear metal performance.

Virtual device composition module 518 may provide a slow path enumeration (denoted by dashed lines 532) and a fast path enumeration (denoted by solid lines 534) pass-through. Slow path enumeration (denoted by dashed lines 532) is by software. Fast path enumeration (denoted by solid lines 534) is by hardware that is provisioned for direct access. DMA provides isolation between fast paths. Each vNic driver 508 is provided with an isolated fast path via DMA to partitioned resources of NETC 522 via its assigned ADIs 516 using the corresponding unique PASID.

Other systems, methods, features, and advantages of the present disclosure will be or become apparent to one with skill in the art upon examination of the following drawings and detailed description. The scope of the invention is defined by the accompanying claims.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope of the claims.

The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant drivers will be developed and the scope of the term driver is intended to include all such new technologies a priori.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the disclosure may include a plurality of "optional" features unless such features conflict.

Throughout this application, various embodiments of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure. Certain features described in the context of various embodiments are not to be considered essential features of those embodiments, unless the embodiment is inoperative without those elements.

## Claims

1. A computing device (104) in communication with an input/output, I/O, device (114) providing virtualized hardware resources for use by a plurality of virtual function, VF, drivers (112) of a plurality of virtual machines, VM, (110) the computing device is configured to:
(302) execute a virtual machine manager, VMM, (108) that implements a physical function, PF, driver (116) and a plurality of base address register, BAR, roles supported by a plurality of virtual functions (128) exposed by the I/O device, the PF driver (116) and the plurality of virtual functions (128) corresponding to the plurality of virtual function, VF, drivers (112) implemented by the plurality of VMs, (110)
in response to a bootup or a reset of the I/O device and a load of the PF driver: (308) set, by at least one of the PF driver and the I/O device, a global configuration status register, CSR, (122) to a mapping-value (160) defining a certain mapping of a plurality of mappings between the plurality of BAR roles and I/O device BARs (126) of the plurality of virtual functions (128), wherein in response to the setting, the plurality of VF drivers (112) for the plurality of virtual functions (128) corresponding to the PF driver (116) are loaded,
wherein (316) each respective VF driver obtains the mapping-value of the global CSR and maps, according to the certain mapping, a plurality of BARs of the VF driver (120) designated for the plurality of BAR roles, to the corresponding I/O device BARs (126) of the plurality of virtual functions mapped to the plurality of BAR roles;
wherein the BAR roles are selected from the group consisting of: Mailbox space, Doorbell space, MSI-X space, and CSR space.

2. The computing device of claim 1, wherein the mapping-value is stored on the I/O device, and the mapping-value of the global CSR is set by the I/O device,
and the computing device is further configured to:
obtain the mapping-value, and
(312) set, by the PF driver, according to the certain mapping corresponding to the mapping-value, addresses of a plurality of BARs of the PF driver (132) designated for the plurality of BAR roles, to the corresponding BARs of the plurality of virtual functions mapped to the plurality of BAR roles.

3. The computing device of any one of the claim 1 to 2, wherein the computing device is configured to:
(310) issue a request of the PF driver to the I/O device, the request denoting a change of at least one mapping between at least one of (i) at least one of the plurality of BAR roles and at least one I/O device BAR (126) of the plurality of virtual functions (128), and (ii) at least one of the plurality of BAR roles and at least one I/O device BAR (126) of the plurality of physical functions (130),
in response to approval of the request, the mapping-value of the global CSR is set according to the change of the at least one mapping.

4. The computing device of any one of the claims 1 to 3, wherein the computing device is configured to:
mirror the mapping-value of the global CSR to each of a plurality of global VF BAR registers (124) designated for the plurality of VF drivers,
wherein each respective VF driver obtains the mapping-value from the corresponding respective global VF BAR register.

5. The computing device of any one of the claims 1 to 4,
wherein the PF driver maps, according to the certain mapping, a plurality of BARs of each respective VF driver designated for the plurality of BAR roles, to the corresponding I/O device BARs of the plurality of virtual functions mapped to the plurality of BAR roles, reflecting the mapping of the I/O device global CSR value.

6. The computing device of any one of the claims 1 to 5, wherein the computing device is further configured to:
set, by at least one of the PF driver and the I/O device, each one of a plurality of global VF driver registers allocated to the plurality of VF drivers to a respective mapping-value, wherein each respective VF driver obtains the respective mapping-value from the one respective global VF BAR register and maps, according to the mapping defined by the respective mapping-value, the plurality of BARs of the VF driver designated for the plurality of roles, to the corresponding I/O device BARs of the plurality of virtual functions mapped to the plurality of BAR roles.

7. The computing device of any one of the claims 1 to 6, wherein the mapping-value is set according to a respective version of the I/O device, wherein different mapping-values defining different mappings are set for different versions of I/O devices.

8. The computing device of any one of the claims 1 to 7, wherein the bootup or the reset of the I/O device comprises at least one of a single-root input/output virtualization, SR-IOV, enablement, and a VF driver exposure operation.

9. The computing device of any one of the claims 1 to 8, wherein the global CSR comprises a plurality of global role CSRs each corresponding to one of the plurality of roles, wherein each of the plurality of global role CSRs is set with a respective role mapping-value defining a certain mapping of a plurality of mappings between a certain role and at least one I/O device BAR of the plurality of virtual functions, wherein each respective VF driver obtains respective role mapping-values from the plurality of global role CSRs and maps at least one BARs of the VF driver designated for each respective role.

10. The computing device of any one of the claims 1 to 9, wherein the I/O device implements a protocol for virtualizing hardware resources thereof based on the Peripheral Component Interconnect Express, PCIe, standard.

11. The computing device of claim 10, wherein the PCIe implements SR-IOV.

12. The computing device of any one of the claims 1 to 11, wherein the global CSR is located in a constant location that does not change during at least one member selected from the group consisting of: subsequent bootup, reset, initialization processes, change in identification of the I/O device, and change in version of the I/O device.

13. The computing device of any one of the claims 1 to 12, wherein a plurality of instances of an adaptive VF, AVF, (112A-D) and/or assignable device interface, ADI, (508) are implemented as the plurality of VF drivers, the plurality of instances of the AVF are mapped to the PF driver implemented as a single common PF driver, wherein the plurality of BARs of the plurality of VF drivers implementable by the plurality of instances of the AVF are concurrently mapped.

14. The computing device of any one of the claims 1 to 13, wherein the mapping-value defines the certain mapping by at least one member selected from the group consisting of: a dataset that maps between mapping-values and the plurality of mappings, conditional code that selects the certain mapping according to the mapping-value, a bit map where each bit corresponds to a different mapping, and predefined structure of the mapping-value that defines locations within the mapping-value corresponding to different mappings.

15. A computing device (104) executing a virtual machine, VM, (110) the computing device configured to:
execute a virtual function, VF, driver (112) corresponding to a PF driver (116) and an input/output, I/O, device (1140) providing virtualized hardware resources,
in response to a bootup or a reset of the VF driver:
access a mapping-value stored in a global CSR (122), the mapping-value defining a certain mapping of a plurality of mappings between a plurality of BAR roles and I/O device BARs (126) of a plurality a virtual functions (128) exposed by the I/O device,
wherein the mapping-value is set by at least one of the PF driver and the I/O device, map according to the certain mapping, a plurality of BARs of the VF driver (120) designated for the plurality of BAR roles, to the corresponding I/O device BARs of the plurality of virtual functions mapped to the plurality of BAR roles, and
access regions of a memory allocated to each of the plurality of BAR roles, using the mapping of the plurality of the BARs of the VF designated for the plurality of BAR roles, wherein the BAR roles are selected from the group consisting of: Mailbox space, Doorbell space, MSI-X space, and CSR space.

## Patentansprüche

1. Rechenvorrichtung (104) in Kommunikation mit einer Ein-/Ausgabe-(E/A)-Vorrichtung (114), die virtualisierte Hardware-Ressourcen zur Verwendung durch eine Vielzahl von Virtual Function (VF)-Treibern (112) einer Vielzahl von virtuellen Maschinen (VM) (110) bereitstellt, wobei die Rechenvorrichtung für Folgendes ausgebildet ist:
(302) Ausführen eines Virtual Machine Manager (VMM) (108), der einen Physical Function (PF)-Treiber (116) und eine Vielzahl von Basisadressregister (BAR)-Rollen implementiert, die von einer Vielzahl von virtuellen Funktionen (128) unterstützt werden, die von der E/A-Vorrichtung ausgesetzt werden, wobei der PF-Treiber (116) und die Vielzahl von virtuellen Funktionen (128) der Vielzahl von Virtual Function (VF)-Treibern (112) entsprechen, die von der Vielzahl von VMs (110) implementiert werden,
als Reaktion auf ein Hochfahren oder ein Zurücksetzen der E/A-Vorrichtung und ein Laden des PF-Treibers:
(308) Einstellen, durch den PF-Treiber und/oder die E/A-Vorrichtung, eines globalen Konfigurationsstatusregisters (CSR) (122) auf einen Zuordnungswert (160), der eine bestimmte Zuordnung einer Vielzahl von Zuordnungen zwischen der Vielzahl von BAR-Rollen und E/A-Vorrichtung-BARs (126) der Vielzahl von virtuellen Funktionen (128) definiert,
wobei als Reaktion auf die Einstellung die Vielzahl von VF-Treibern (112) für die Vielzahl von virtuellen Funktionen (128), die dem PF-Treiber (116) entsprechen, geladen werden,
wobei (316) jeder jeweilige VF-Treiber den Zuordnungswert des globalen CSR erhält und gemäß der bestimmten Zuordnung eine Vielzahl von BARs des VF-Treibers (120), die für die Vielzahl von BAR-Rollen bestimmt sind, den entsprechenden E/A-Vorrichtung-BARs (126) der Vielzahl von virtuellen Funktionen, die der Vielzahl von BAR-Rollen zugeordnet sind, zuordnet;
wobei die BAR-Rollen aus der Gruppe ausgewählt werden, die aus Folgendem besteht:
Mailbox-Raum, Doorbell-Raum, MSI-X-Raum und CSR-Raum.

2. Rechenvorrichtung nach Anspruch 1,
wobei der Zuordnungswert auf der E/A-Vorrichtung gespeichert wird und der Zuordnungswert des globalen CSR durch die E/A-Vorrichtung eingestellt wird, und die Rechenvorrichtung ferner für Folgendes ausgebildet ist:
Erhalten des Zuordnungswertes, und
(312) Einstellen, durch den PF-Treiber, gemäß der bestimmten Zuordnung, die dem Zuordnungswert entspricht, von Adressen einer Vielzahl von BARs des PF-Treibers (132), die für die Vielzahl von BAR-Rollen bestimmt sind, auf die entsprechenden BARs der Vielzahl von virtuellen Funktionen, die der Vielzahl von BAR-Rollen zugeordnet sind.

3. Rechenvorrichtung nach einem der Ansprüche 1 bis 2,
wobei die Rechenvorrichtung für Folgendes ausgebildet ist:
(310) Ausgeben einer Anforderung des PF-Treibers an die E/A-Vorrichtung, wobei die Anforderung eine Änderung von mindestens einer Zuordnung zwischen mindestens einem der folgenden Elemente angibt:
(i) mindestens eine der Vielzahl von BAR-Rollen und mindestens ein E/A-Vorrichtungs-BAR (126) der Vielzahl von virtuellen Funktionen (128), und
(ii) mindestens eine der Vielzahl von BAR-Rollen und mindestens ein E/A-Vorrichtungs-BAR (126) der Vielzahl von physikalischen Funktionen (130), wobei als Reaktion auf die Genehmigung der Anforderung der Zuordnungswert des globalen CSR entsprechend der Änderung der mindestens einen Zuordnung eingestellt wird.

4. Rechenvorrichtung nach einem der Ansprüche 1 bis 3,
wobei die Rechenvorrichtung für Folgendes ausgebildet ist:
Spiegeln des Zuordnungswertes des globalen CSR an jedes einer Vielzahl von globalen VF BAR-Registern (124), die für die Vielzahl von VF-Treibern bestimmt sind,
wobei jeder jeweilige VF-Treiber den Zuordnungswert aus dem entsprechenden jeweiligen globalen VF-BAR-Register erhält.

5. Rechenvorrichtung nach einem der Ansprüche 1 bis 4,
wobei der PF-Treiber gemäß der bestimmten Zuordnung eine Vielzahl von BARs jedes jeweiligen VF-Treibers, der für die Vielzahl von BAR-Rollen bestimmt ist, den entsprechenden E/A-Vorrichtungs-BARs der Vielzahl von virtuellen Funktionen zuordnet, die der Vielzahl von BAR-Rollen zugeordnet sind, was die Zuordnung des globalen E/A-Vorrichtungs-CSR-Wertes widerspiegelt.

6. Rechenvorrichtung nach einem der Ansprüche 1 bis 5,
wobei die Rechenvorrichtung ferner für Folgendes ausgebildet ist:
Einstellen, durch den PF-Treiber und/oder die E/A-Vorrichtung, jedes der Vielzahl von globalen VF-Treiber-Registern, die der Vielzahl von VF-Treibern zugeordnet sind, auf einen entsprechenden Zuordnungswert,
wobei jeder jeweilige VF-Treiber den jeweiligen Zuordnungswert von dem einen jeweiligen globalen VF-BAR-Register erhält und gemäß der durch den jeweiligen Zuordnungswert definierten Zuordnung die Vielzahl von BARs des VF-Treibers, die für die Vielzahl von Rollen bestimmt sind, den entsprechenden E/A-Vorrichtungs-BARs der Vielzahl von virtuellen Funktionen, die der Vielzahl von BAR-Rollen zugeordnet sind, zuordnet.

7. Rechenvorrichtung nach einem der Ansprüche 1 bis 6,
wobei der Zuordnungswert entsprechend einer jeweiligen Version der E/A-Vorrichtung eingestellt wird, wobei für verschiedene Versionen von E/A-Vorrichtungen verschiedene Zuordnungswerte eingestellt werden, die verschiedene Zuordnungen definieren.

8. Rechenvorrichtung nach einem der Ansprüche 1 bis 7,
wobei das Hochfahren oder das Zurücksetzen der E/A-Vorrichtung mindestens eine der folgenden Operationen umfasst: Aktivierung einer Single-Root Input/Output-Virtualisierung (SR-IOV) und eine VF-Treiber-Freigabeoperation.

9. Rechenvorrichtung nach einem der Ansprüche 1 bis 8,
wobei das globale CSR eine Vielzahl von globalen Rollen-CSRs umfasst, die jeweils einer der Vielzahl von Rollen entsprechen,
wobei jede der Vielzahl von globalen Rollen-CSRs mit einem jeweiligen Rollenzuordnungswert festgelegt ist, der eine bestimmte Zuordnung einer Vielzahl von Zuordnungen zwischen einer bestimmten Rolle und mindestens einer E/A-Vorrichtungs-BAR der Vielzahl von virtuellen Funktionen definiert, wobei jeder jeweilige VF-Treiber jeweilige Rollenzuordnungswerte von der Vielzahl von globalen Rollen-CSRs erhält und mindestens ein BAR des VF-Treibers abbildet, das für jede jeweilige Rolle bestimmt ist.

10. Rechenvorrichtung nach einem der Ansprüche 1 bis 9,
wobei die E/A-Vorrichtung ein Protokoll zur Virtualisierung seiner Hardware-Ressourcen implementiert, das auf dem Peripheral Component Interconnect Express (PCIe)-Standard basiert.

11. Rechenvorrichtung nach Anspruch 10,
wobei der PCIe SR-IOV implementiert.

12. Rechenvorrichtung nach einem der Ansprüche 1 bis 11,
wobei sich das globale CSR an einem konstanten Ort befindet, der sich nicht ändert, wenn mindestens ein Element aus der Gruppe ausgewählt wird, die aus Folgendem besteht:
nachfolgende Hochfahr-, Zurücksetzungs- und Initialisierungsprozesse, Änderung der Identifikation der E/A-Vorrichtung und Änderung der Version der E/A-Vorrichtung.

13. Rechenvorrichtung nach einem der Ansprüche 1 bis 12,
wobei eine Vielzahl von Instanzen einer adaptiven VF (AVF) (112A-D) und/oder einer zuweisbaren Geräteschnittstelle (ADI) (508) als die Vielzahl von VF-Treibern implementiert sind, wobei die Vielzahl von Instanzen der AVF dem PF-Treiber zugeordnet sind, der als ein einziger gemeinsamer PF-Treiber implementiert ist, wobei die Vielzahl von BARs der Vielzahl von VF-Treibern, die durch die Vielzahl von Instanzen der AVF implementiert werden können, gleichzeitig zugeordnet werden.

14. Rechenvorrichtung nach einem der Ansprüche 1 bis 13,
wobei der Zuordnungswert die bestimmte Zuordnung durch mindestens ein Element definiert, das aus der Gruppe ausgewählt wird, die aus Folgendem besteht:
einem Datensatz, der zwischen Zuordnungswerten und der Vielzahl von Zuordnungen zuordnet, einem bedingten Code, der die bestimmte Zuordnung entsprechend dem Zuordnungswert auswählt, eine Bit-Zuordnung, bei der jedes Bit einer anderen Zuordnung entspricht, und eine vordefinierte Struktur des Zuordnungswertes, die Stellen innerhalb des Zuordnungswertes definiert, die verschiedenen Zuordnungen entsprechen.

15. Rechenvorrichtung (104), die eine virtuelle Maschine (VM) (110) ausführt, wobei die Rechenvorrichtung für Folgendes ausgebildet ist:
Ausführen eines Virtual Function (VF)-Treibers (112), der einem PF-Treiber (116) entspricht, und einer Ein-/Ausgabevorrichtung (1140), die virtualisierte Hardware-Ressourcen bereitstellt,
als Reaktion auf ein Hochfahren oder ein Zurücksetzen des VF-Treibers:
Zugreifen auf einen Zuordnungswert, der in einem globalen CSR (122) gespeichert ist, wobei der Zuordnungswert eine bestimmte Zuordnung einer Vielzahl von Zuordnungen zwischen einer Vielzahl von BAR-Rollen und E/A-Vorrichtungs-BARs (126) einer Vielzahl von virtuellen Funktionen (128) definiert, die von der E/A-Vorrichtung ausgesetzt sind,
wobei der Zuordnungswert von dem PF-Treiber und/oder der E/A-Vorrichtung festgelegt wird,
Zuordnen, gemäß der bestimmten Zuordnung, einer Vielzahl von BARs des VF-Treibers (120), die für die Vielzahl von BAR-Rollen bestimmt sind, zu den entsprechenden E/A-Vorrichtungs-BARs der Vielzahl von virtuellen Funktionen, die der Vielzahl von BAR-Rollen zugeordnet sind, und
Zugreifen auf Bereiche eines Speichers, die jeder der Vielzahl von BAR-Rollen zugewiesen sind, unter Verwendung der Zuordnung der Vielzahl von BARs der VF, die für die Vielzahl von BAR-Rollen bestimmt sind,
wobei die BAR-Rollen aus der Gruppe ausgewählt werden, die aus Folgendem besteht:
Mailbox-Raum, Doorbell-Raum, MSI-X-Raum und CSR-Raum.

## Revendications

1. Dispositif informatique (104) en communication avec un dispositif d'entrée/sortie (E/S) (114) fournissant des ressources matérielles virtualisées destinées à être utilisées par une pluralité de pilotes de fonctions virtuelles (VF) (112) d'une pluralité de machines virtuelles (VM) (110), le dispositif informatique étant configuré pour :
(302) exécuter un gestionnaire de machine virtuelle (VMM) (108) qui met en oeuvre un pilote de fonctions physiques (PF) (116) et une pluralité de rôles de registre d'adresses de base (BAR) pris en charge par une pluralité de fonctions virtuelles (128) exposées par le dispositif d'E/S, le pilote PF (116) et la pluralité de fonctions virtuelles (128) correspondant à la pluralité de pilotes de fonctions virtuelles (VF) (112) mis en oeuvre par la pluralité de VM (110),
en réponse à un démarrage ou à une réinitialisation du dispositif d'E/S et à un chargement du pilote PF :
(308) régler, par le pilote PF et/ou le dispositif d'E/S, un registre d'état de configuration (CSR) global (122) sur une valeur de mappage (160) définissant un certain mappage d'une pluralité de mappages entre la pluralité de rôles BAR et des BAR de dispositif d'E/S (126) de la pluralité de fonctions virtuelles (128), la pluralité de pilotes VF (112) pour la pluralité de fonctions virtuelles (128) qui correspondent au pilote PF (116) étant chargée en réponse au réglage,
(316) chaque pilote VF respectif obtenant la valeur de mappage du CSR global et mappant, selon le certain mappage, une pluralité de BAR du pilote VF (120) désigné pour la pluralité de rôles BAR, avec les BAR de dispositif d'E/S (126) correspondants de la pluralité de fonctions virtuelles mappées avec la pluralité de rôles BAR ;
les rôles BAR étant choisis dans le groupe constitué de : un espace de boîte aux lettres, un espace d'avertissement, un espace MSI-X et un espace CSR.

2. Dispositif informatique selon la revendication 1, la valeur de mappage étant stockée sur le dispositif d'E/S, et la valeur de mappage du CSR global étant définie par le dispositif d'E/S,
le dispositif informatique étant en outre configuré pour :
obtenir la valeur de mappage, et
(312) régler, par le pilote PF, selon le certain mappage correspondant à la valeur de mappage, des adresses d'une pluralité de BAR du pilote PF (132) désigné pour la pluralité de rôles BAR, sur les BAR correspondants de la pluralité de fonctions virtuelles mappées avec la pluralité de rôles BAR.

3. Dispositif informatique selon l'une quelconque des revendications 1 et 2, le dispositif informatique étant configuré pour :
(310) émettre une requête du pilote PF vers le dispositif d'E/S, la requête indiquant une modification d'au moins un mappage entre (i) au moins un rôle BAR de la pluralité de rôles BAR et au moins un BAR de dispositif d'E/S (126) de la pluralité de fonctions virtuelles (128) et/ou (ii) au moins un rôle BAR de la pluralité de rôles BAR et au moins un BAR de dispositif d'E/S (126) de la pluralité de fonctions physiques (130), en réponse à l'approbation de la demande, la valeur de mappage du CSR global étant réglée selon la modification de l'au moins un mappage.

4. Dispositif informatique selon l'une quelconque des revendications 1 à 3, le dispositif informatique étant configuré pour :
répliquer la valeur de mappage du CSR global dans chaque registre d'une pluralité de registres BAR VF globaux (124) désignés pour la pluralité de pilotes VF,
chaque pilote VF respectif obtenant la valeur de mappage auprès du registre BAR VF global respectif correspondant.

5. Dispositif informatique selon l'une quelconque des revendications 1 à 4,
dans lequel le pilote PF mappe, selon le certain mappage, une pluralité de BAR de chaque pilote VF respectif désigné pour la pluralité de rôles BAR, avec les BAR de dispositif d'E/S correspondants de la pluralité de fonctions virtuelles mappées avec la pluralité de rôles BAR, en reflétant le mappage de la valeur CSR globale de dispositif d'E/S.

6. Dispositif informatique selon l'une quelconque des revendications 1 à 5, le dispositif informatique étant en outre configuré pour :
régler, par le pilote PF et/ou le dispositif d'E/S, chaque registre d'une pluralité de registres globaux de pilote VF alloués à la pluralité de pilotes VF sur une valeur de mappage respective, chaque pilote VF respectif obtenant la valeur de mappage respective auprès du registre BAR VF global respectif et mappant, selon le mappage défini par la valeur de mappage respective, la pluralité de BAR du pilote VF désigné pour la pluralité de rôles, avec les BAR de dispositif d'E/S correspondants de la pluralité de fonctions virtuelles mappées avec la pluralité de rôles BAR.

7. Dispositif informatique selon l'une quelconque des revendications 1 à 6, dans lequel la valeur de mappage est réglée selon une version respective du dispositif d'E/S, des valeurs de mappage différentes qui définissent des mappages différents étant réglées pour des versions différentes de dispositifs d'E/S.

8. Dispositif informatique selon l'une quelconque des revendications 1 à 7, dans lequel le démarrage ou la réinitialisation du dispositif d'E/S comprend au moins une opération parmi une activation de virtualisation d'entrée/sortie à racine unique (SR-IOV) et une opération d'exposition de pilote VF.

9. Dispositif informatique selon l'une quelconque des revendications 1 à 8, dans lequel le CSR global comprend une pluralité de CSR de rôle globaux correspondant chacun à un rôle de la pluralité de rôles, chaque CSR de rôle global de la pluralité de CSR de rôle globaux étant réglé avec une valeur de mappage de rôle respective définissant un certain mappage d'une pluralité de mappages entre un certain rôle et au moins un BAR de dispositif d'E/S de la pluralité de fonctions virtuelles, chaque pilote VF respectif obtenant des valeurs de mappage de rôle respectives auprès de la pluralité de CSR de rôle globaux et mappant au moins un BAR du pilote VF désigné pour chaque rôle respectif.

10. Dispositif informatique selon l'une quelconque des revendications 1 à 9, dans lequel le dispositif d'E/S met en oeuvre un protocole de virtualisation de ressources matérielles associées sur la base de la norme d'interconnexion de composants périphériques express (PCIe).

11. Dispositif informatique selon la revendication 10, dans lequel la norme PCIe met en oeuvre une SR-IOV.

12. Dispositif informatique selon l'une quelconque des revendications 1 à 11, dans lequel le CSR global est situé à un emplacement constant qui ne change pas au cours d'au moins un élément choisi dans le groupe constitué de : un démarrage ultérieur, une réinitialisation, un processus d'initialisation, un changement d'identification du dispositif d'E/S et un changement de version du dispositif d'E/S.

13. Dispositif informatique selon l'une quelconque des revendications 1 à 12, dans lequel une pluralité d'instances d'une VF adaptative (AVF) (112A-D) et/ou d'une interface de dispositif attribuable (ADI), (508) sont mises en oeuvre en tant que pluralité de pilotes VF, la pluralité d'instances AVF étant mappées avec le pilote PF mis en oeuvre en tant que pilote PF commun unique, la pluralité de BAR de la pluralité de pilotes VF qui peuvent être mis en oeuvre par la pluralité d'AVF étant mappés simultanément.

14. Dispositif informatique selon l'une quelconque des revendications 1 à 13, dans lequel la valeur de mappage définit le certain mappage par au moins un élément choisi dans le groupe constitué de : un ensemble de données qui établit un mappage entre des valeurs de mappage et la pluralité de mappages, un code conditionnel qui sélectionne le certain mappage selon la valeur de mappage, une carte de bits où chaque bit correspond à un mappage différent, et une structure prédéfinie de la valeur de mappage qui définit des emplacements dans la valeur de mappage correspondant à des mappages différents.

15. Dispositif informatique (104) exécutant une machine virtuelle (VM) (110), le dispositif informatique étant configuré pour :
exécuter un pilote de fonction virtuelle (VF) (112) correspondant à un pilote PF (116) et un dispositif d'entrée/sortie (E/S) (1140) fournissant des ressources matérielles virtualisées,
en réponse à un démarrage ou à une réinitialisation du pilote VF :
accéder à une valeur de mappage stockée dans un CSR global (122), la valeur de mappage définissant un certain mappage d'une pluralité de mappages entre une pluralité de rôles BAR et des BAR de dispositif d'E/S (126) d'une pluralité de fonctions virtuelles (128) exposées par le dispositif d'E/S,
la valeur de mappage étant réglée par le pilote PF et/ou le dispositif d'E/S, mapper, selon le certain mappage, une pluralité de BAR du pilote VF (120) désigné pour la pluralité de rôles BAR, avec les BAR de dispositif d'E/S correspondants de la pluralité de fonctions virtuelles mappées avec la pluralité de rôles BAR, et
accéder à des régions d'une mémoire allouée à chaque rôle BAR de la pluralité de rôles BAR, au moyen du mappage de la pluralité des BAR de la VF désignée pour la pluralité de rôles BAR, les rôles BAR étant choisis dans le groupe constitué de : un espace de boîte aux lettres, un espace d'avertissement, un espace MSI-X et un espace CSR.
